(19) Europäisches Patentamt

European Patent Office

Office européen des brevets

(11) **EP 1 489 289 A2**

(12) **EUROPÄISCHE PATENTANMELDUNG**

(43) Veröffentlichungstag:
**22.12.2004 Patentblatt 2004/52**

(51) Int Cl.7: **F02D 41/10**, F02B 37/04,
F02B 39/10, F02B 33/44

(21) Anmeldenummer: **04010017.4**

(22) Anmeldetag: **27.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **20.06.2003 DE 10328100**

(71) Anmelder: **Volkswagen Aktiengesellschaft**
**38436 Wolfsburg (DE)**

(72) Erfinder:
• **Standt, Ulrich-Dieter, Dr.**
**38527 Meine (DE)**
• **Rhode, Wilfried**
**38527 Meine (DE)**

(74) Vertreter: **Meyer, Enno, Dr.**
**c/o Jung HML**
**Patent- und Rechtsanwälte**
**Schraudolphstrasse 3**
**80799 München (DE)**

(54) **Verfahren zum partikelarmen Betrieb eines Dieselmotors und partikelarmer Dieselmotor**

(57) Bei einem Verfahren zum partikelarmen Betrieb eines einen Abgas-Turbolader aufweisenden Dieselmotors, wobei mit dem Einleiten eines Beschleunigungsvorgangs zusätzliche Ladeluft eingebracht wird, ist die Differenz $\Delta\lambda$ zwischen dem Luftverhältnis $\lambda$ eines Betriebs des Dieselmotors mit zusätzlicher Ladeluft und dem Luftverhältnis $\lambda$ eines Betrieb ohne zusätzliche Ladeluft größer oder gleich + 0,1.

FIG.1

**Beschreibung**

Die Erfindung betrifft ein Verfahren zum partikelarmen Betrieb eines Dieselmotors gemäß dem Oberbegriff des Anspruchs 1 sowie einen partikelarmen Dieselmotor gemäß dem Oberbegriff des Anspruchs 14.

Die Abgasgesetzgebung mit ihren strengen Vorschriften für Abgasemissionen und Partikelemissionen sowie die Forderung nach Verbrauchsreduktion für PKWs bestimmen die Entwicklung neuer Motoren. Die Abgasturboaufladung stellt neben dem Einspritzsystem und der Motorsteuerung eine wichtige technische Komponente zur Erfüllung künftiger Emissions- und Verbrauchsanforderungen dar. Beim Dieselmotor ist die Turbine mit variabler Leitschaufelgeometrie bereits Stand der Technik und hat zu wesentlichen Verbesserungen bezüglich Verbrauch und Fahrdynamik geführt.

Die Entwicklung aufgeladener kleinvolumiger Motoren führt zu einer erhöhten Leistungsdichte mit einer Verbrauchsreduktion im Vergleich zu großvolumigen Saugmotoren. Um das im Vergleich zum maximalen Drehmoment und der Leistung bei Nenndrehzahl etwas schwache Anfahrdrehmoment auszugleichen, wird in weiteren Entwicklungen der Bereich der Abgasturboaufladung vorangetrieben. Lösungen mit erhöhtem Anfahrdrehmoment bieten Turbolader mit variablem Verdichter und Turbine, die zweistufige Aufladung sowie die Kombination von Turbolader und e-Booster.

Eine Darstellung heutiger Abgas-Turbolader und deren Anwendung ist beispielsweise der Veröffentlichung Gabriel, H., et al.: "Neue Erkenntnisse bei der variablen Turbinen- und Verdichtergeometrie für die Anwendung in Turboladern für PKW-Motoren", Wiener Motorensymposium 2002, S. 289 - 307, zu entnehmen. Beschrieben sind darin Abgas-Turbolader mit variabler Turbinengeometrie, bei der die Turbinenleistung durch Veränderung von Anströmungswinkel und -geschwindigkeit am Turbinenradeintritt geregelt wird, Abgas-Turbolader mit variabler Verdichtergeometrie, Systeme mit zweistufig geregelter Aufladung, bei der zwei Turbolader zur Erhöhung des Anfahrtdrehmoments in Serie angeordnet sind, sowie Systeme mit elektrisch angetriebenem Strömungsverdichter, sogenanntem e-Booster.

Bei letzterem wird im Beschleunigungsfall das Druckniveau der Ladeluft durch das kurzzeitige Zuschalten einer elektrisch betriebenen Luftfördereinrichtung erhöht, so daß sich das Anfahrverhalten durch den schneller aufgebauten Ladedruck und dem darauffolgenden höheren Drehmoment nachhaltig verbessert.

Abgas-Turbolader weisen allerdings einen betriebsbedingten Nachteil auf. Da man bei einer Lasterhöhung, sprich Beschleunigung, zunächst mehr Kraftstoff einspritzen muß, wodurch mit der höheren Leistung auch mehr Abgas erzeugt wird, so hinken sie in der Bereitstellung der Ladeluft stets etwas der Leistung hinterher. Dieses verzögerte Ansprechen der Abgas-Turbolader bewirkt motorisch einen erhöhten Partikelausstoß während der Lasterhöhung bzw. Beschleunigung, weil die Partikel im Grunde durch motorisch bedingte lokale Luftmangelzustände während der Verbrennung gebildet werden.

Eine Abhilfe bietet die Verzögerung der Beschleunigungsanreicherung, wobei auf dem Wege der Kennfeldbegrenzung die maximale Einspritzmenge zurückgenommen wird. Nachteilig ist, daß damit eine Verringerung des Drehmoments und eine Verlängerung der Beschleunigungsphase einher geht, so daß die an sich erzielbare Leistung aus Emissionsgründen verringert wird.

Der Erfindung liegt die Aufgabe zugrunde, ein Verfahren zum Betrieb eines mit einem Abgas-Turbolader ausgestatteten Dieselmotors sowie einen derartigen Dieselmotor zu schaffen, bei dem die Beschleunigungsphase einem partikelarmen Abgasverlauf ohne Leistungsverlust aufweist.

Die Aufgabe wird durch ein Verfahren nach Anspruch 1 sowie durch einen partikelarmen Dieselmotor nach Anspruch 14 gelöst. Bevorzugte Ausgestaltung der Erfindung sind Gegenstand der Unteransprüche.

Bei dem erfindungsgemäßen Verfahren zum partikelarmen Betrieb eines einen Abgas-Turbolader aufweisenden Dieselmotors, wird mit dem Einleiten eines Beschleunigungsvorgangs zusätzlich Ladeluft in den Motor eingebracht wird, wobei durch die zusätzliche Ladelufterhöhung während der Erhöhung der Motorlast ein Betrieb mit einem Luftverhältnis, ausgedrückt durch $\lambda$, erreicht wird, welcher sich vom Betrieb ohne die zusätzliche Ladelufterhöhung um eine Differenz des Luftverhältnisses $\Delta\lambda$ von mindestens +0,1 unterscheidet.

Vorzugsweise wird die zusätzliche Ladeluft über einen Lader mit einem Zusatzantrieb erzeugt, wobei der zusätzliche Antrieb insbesondere ein Elektromotor sein kann. Alternativ kann die zusätzliche Ladeluft über einen Druckluftspeicher erzeugt werden, wobei vorzugsweise der Druckluftspeicher während des normalen Fahrbetriebs gefüllt wird.

Vorzugsweise wird durch die zusätzliche Ladelufterhöhung während der Erhöhung der Motorlast ein Betrieb mit einem Brutto-Luftverhältnis von $\lambda = 1,2$ nicht unterschritten.

Vorzugsweise wird mit der Beschleunigungsanforderung des Fahrers die zusätzliche Ladeluft bereitgestellt wird. Ferner kann die zusätzliche Ladeluft bereitgestellt werden, wenn die Differenz zwischen einem Ist-$\lambda$-Wert und einem Wunsch-$\lambda$-Wert größer ist als ein vorbestimmter Schwellenwert.

Vorzugsweise wird die zusätzliche Ladeluft für eine vorbestimmte Zeiteinheit bereitgestellt. Es ist auch möglich die Bereitstellung der zusätzlichen Ladeluft zu beenden, wenn ein vorbestimmter $\lambda$-Wert erreicht ist oder wenn die Differenz zwischen dem Ist-$\lambda$-Wert und dem Wunsch-$\lambda$-Wert kleiner als ein vorbestimmter zweiter Schwellwert ist. Ebenso kann dazu im Falle einer momentenbasierten Motorsteuerung die Differenz zwischen dem Wunsch-Moment und dem Ist-Moment in gleicher Weise herangezogen werden.

Ein erfindungsgemäßer partikelarmer Dieselmotor mit einem Abgas-Turbolader weist eine Vorrichtung zum Einbringen zusätzlicher Ladeluft und eine Steuereinrichtung zur Durchführung des im vorangegangenen beschriebenen Verfahrens auf.

Mit dem obengenannten Verfahren wird bei gleichbleibender Einspritzmenge, also bei gleichbleibender Motorleistung, durch eine Erhöhung der Ladeluftmasse eine Erhöhung des Luftverhältnisses und damit eine Verbrennung mit geringerer Partikelbildung bewirkt. Das heißt, es wird die erhöhte Ladeluftmenge nicht zur Leistungserhöhung ausgenutzt. Dies spielt insbesondere eine Rolle bei der Erreichung niedrigerer Partikelemissionen und Einhaltung zukünftiger Abgasemissions-Grenzwerte. Ein Vergleich zwischen einer Beschleunigungsphase mit zusätzlicher Ladeluft, d.h. zusätzlichem Booster, und einer Beschleunigungsphase ohne zusätzliche Ladeluft zeigt, daß die Partikelemission in dem Beschleunigungsbereich, in dem der Abgasturbolader der Leistung hinterherhinkt, um bis zu einem Faktor 3 gesenkt werden kann.

Eine bevorzugte Ausführungsform der Erfindung wird nachfolgend anhand der einzigen Zeichnung erläutert, die einen Beschleunigungsvorgang eines mit einem Abgasturboladers ausgerüsteten Dieselmotors mit und ohne zusätzlichen Booster gegenüberstellt.

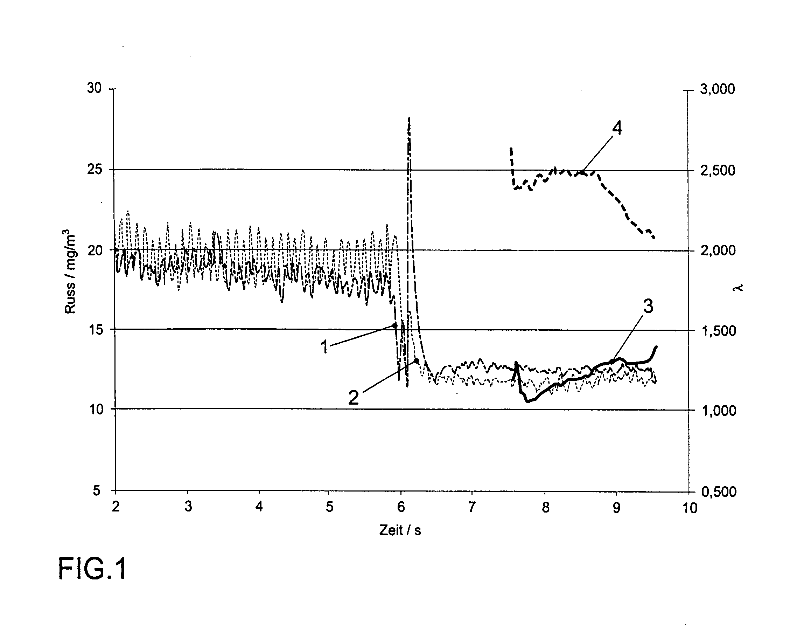

Fig. 1 zeigt den $\lambda$-Verlauf eines Dieselmotors während des Beginns einer Beschleunigungsphase und zwar einmal den Kurvenverlauf 1 von $\lambda$ mit einem Booster zum Einbringen zusätzlicher Ladeluft, den Kurvenverlauf 2 von $\lambda$ ohne Booster, sowie gleichlaufend dazu die gemessenen Rußemissionswerte in mg/m³ und zwar einmal die Rußemissionskurve 3 mit Booster und die Rußemissionskurve 4 ohne Booster. In der dargestellten Zeitspanne von 2 bis ca. 6 sec. befindet sich der Dieselmotor in einem konstantlaufenden Zustand und die $\lambda$-Werte mit und ohne Booster sind in etwa gleich bei einem Mittelwert von etwa 1,9 angesiedelt. Im Zeitpunkt von ca. 6 sec liegt eine Beschleunigungsanforderung des Fahrers an den Dieselmotor vor und es wird entsprechend Kraftstoff eingespritzt mit der Folge des Abfallens des $\lambda$-Wertes. Aufgrund der Beschleunigungsanforderung des Fahrers wird zusätzliche Ladeluft eingeblasen, mit der Folge, daß der $\lambda$-Wert für den Betrieb mit zusätzlichem Booster höher liegt als der für den Betrieb ohne Booster, wie dies in Kurve 1 dargestellt ist. Die Differenz zwischen den beiden genannten $\lambda$-Werten für den Betrieb mit und ohne zusätzlichem Booster beträgt im Beschleunigungsfall mindestens ungefähr 0,1. Die Berechnung der dynamischen Partikelemissionen während des Beschleunigungsvorgangs wurde aus einem Kennfeld der gemessenen stationären Schwärzungszahlen bestimmt, wobei die Rußemission eine Funktion der Schwärzungszahl ist, d.h.:

$$\text{Rußemission} = f(SZ),$$

mit

$$SZ = \text{Schwärzungszahl.}$$

Unter Verwendung einer vierdimensionalen, multiplen Interpolationsformel, nämlich

$$\text{Ruß} = f(a_1 \times DRZ;\ a_2 \times ESM;\ a_3 \times LFM),$$

mit $a_i$: Interpolationskoeffizienten, die abhängig von der Russemission sind, DRZ: Drehzahl, ESM: Einspritzmenge, LFM: Luftmasse, konnten die in Fig. 1 gezeigten Rußemissionen in mg/m³ für die Beschleunigungsbereiche zwischen 7,5 und 9,5 sec. ermittelt werden, wobei der Bereich zwischen 6 sec und 7,5 sec des Beschleunigungsvorgangs aufgrund der verwendeten üblichen Meßtechnik nicht erfaßt werden konnte. Dennoch ist zu erkennen, daß die Zugabe zusätzlicher Ladeluft zu einer Reduzierung der Rußemission um bis zu einen Faktor 3 führt.

Der als Booster bezeichnete zusätzliche Lader zur Bereitstellung zusätzlicher Ladeluft wird hier im Beispiel mit dem Erreichen des gewünschten $\lambda$-Wert abgeschaltet.

## BEZUGSZEICHENLISTE

| | |
|---|---|
| 1 | $\lambda$-Verlauf mit zusätzlichem Booster |
| 2 | $\lambda$-Verlauf ohne zusätzlichen Booster |
| 3 | Rußemission mit Booster in mg/m³ |
| 4 | Rußemission ohne Booster in mg/m³ |

## Patentansprüche

**1.** Verfahren zum partikelarmen Betrieb eines einen Abgas-Turbolader aufweisenden Dieselmotors, wobei mit dem Einleiten eines Beschleunigungsvorgangs zusätzliche Ladeluft eingebracht wird, **dadurch gekennzeichnet, daß** die Differenz $\Delta\lambda$ zwischen dem Luftverhältnis $\lambda$ eines Betriebs des Dieselmotors mit zusätzlicher Ladeluft und dem Luftverhältnis $\lambda$ eines Betrieb ohne zusätzliche Ladeluft größer oder gleich + 0,1 ist.

**2.** Verfahren nach Anspruch 1, **dadurch gekennzeichnet, daß** die zusätzliche Ladeluft über einen Lader mit einem Zusatzantrieb erzeugt wird.

**3.** Verfahren nach Anspruch 2, **dadurch gekennzeichnet, daß** der zusätzliche Antrieb ein Elektromotor ist.

**4.** Verfahren nach Anspruch 1, **dadurch gekennzeichnet, daß** die zusätzliche Ladeluft über einen Druckluftspeicher erzeugt wird.

**5.** Verfahren nach Anspruch 4, **dadurch gekennzeichnet, daß** der Druckluftspeicher während des normalen Fahrbetriebs gefüllt wird.

**6.** Verfahren nach einem der vorangegangenen Ansprüche, **dadurch gekennzeichnet, daß** durch die zusätzliche Ladeluft während der Erhöhung der Motorlast ein Betrieb mit einem Brutto-Luftverhältnis von $\lambda$ = 1,2 nicht unterschritten wird.

**7.** Verfahren nach einem der vorangegangenen Ansprüche, **dadurch gekennzeichnet, daß** die zusätzliche Ladeluft mit der Beschleunigungsanforderung des Fahrers eingebracht wird.

**8.** Verfahren nach einem der Ansprüche 1 bis 6, **dadurch gekennzeichnet, daß** die zusätzliche Ladeluft eingebracht wird, wenn die Differenz zwischen der Ist-Einspritzmenge und der Wunsch-Einspritzmenge größer als ein vorbestimmter erster Schwellenwert ist.

**9.** Verfahren nach einem der Ansprüche 1 bis 6, **dadurch gekennzeichnet, daß** die zusätzliche Ladeluft eingebracht wird, wenn die Differenz zwischen dem Ist-Moment und dem Wunsch-Moment größer als ein vorbestimmter erster Schwellenwert ist.

**10.** Verfahren nach Anspruch 7 bis 9, **dadurch gekennzeichnet, daß** die zusätzliche Ladeluft für eine vorbestimmte Zeiteinheit eingebracht wird.

**11.** Verfahren nach Anspruch 7 bis 9, **dadurch gekennzeichnet, daß** die Einbringung der zusätzlichen Ladeluft beendet wird, wenn ein vorbestimmter $\lambda$-Wert erreicht ist.

**12.** Verfahren nach Anspruch 7 bis 9, **dadurch gekennzeichnet, daß** die Einbringung der zusätzlichen Ladeluft beendet wird, wenn die Differenz zwischen der Ist-Einspritzmenge und der Wunsch-Einspritzmenge kleiner als ein vorbestimmter zweiter Schwellenwert ist.

**13.** Verfahren nach Anspruch 7 bis 9, **dadurch gekennzeichnet, daß** die Einbringung der zusätzlichen Ladeluft beendet wird, wenn die Differenz zwischen dem Ist-Moment und dem Wunsch-Moment kleiner als ein vorbestimmter zweiter Schwellenwert ist.

**14.** Partikelarmer Dieselmotor mit einem Abgasturbolader und einer Vorrichtung zum Einbringen zusätzlicher Ladeluft, wobei der Dieselmotor eine Steuerung zu Durchführung des Verfahrens nach einem der vorangegangenen Ansprüche aufweist.

**15.** Dieselmotor nach Anspruch 14, **dadurch gekennzeichnet, daß** die Vorrichtung zur Einbringung zusätzliche Ladeluft durch einen Turbolader mit Elektroantrieb gebildet ist.

**16.** Dieselmotor nach Anspruch 14, **dadurch gekennzeichnet, daß** die Vorrichtung zur Einbringung zusätzliche Ladeluft durch einen Druckluftspeicher gebildet ist.

FIG.1

EP 1 489 289 A2